Europäisches Patentamt

European Patent Office

Office européen des brevets

(19)

(11) **EP 0 740 173 B1**

(12) **EUROPÄISCHE PATENTSCHRIFT**

(45) Veröffentlichungstag und Bekanntmachung des Hinweises auf die Patenterteilung:
**22.03.2006 Patentblatt 2006/12**

(51) Int Cl.:
*G02B 6/293* (2006.01)    *H04B 10/18* (2006.01)

(21) Anmeldenummer: **96105810.4**

(22) Anmeldetag: **12.04.1996**

(54) **Schaltungsanordnung zur Dispersionskompensation in optischen Übertragungssystemen mittels eines optischen Filters**

Circuit structure for dispersion compensation in optical communication systems by means of an optical filter

Structure de circuit pour compenser la dispersion dans les systèmes de télécommunications optiques au moyen d'un filtre optique

(84) Benannte Vertragsstaaten:
**AT BE CH DE FR GB IT LI NL SE**

(30) Priorität: **25.04.1995  DE 19515158**

(43) Veröffentlichungstag der Anmeldung:
**30.10.1996  Patentblatt 1996/44**

(73) Patentinhaber: **SIEMENS AKTIENGESELLSCHAFT**
**80333 München (DE)**

(72) Erfinder: **Kotten, Klaus, Dipl.-Ing.**
**81477 München (DE)**

(56) Entgegenhaltungen:
**US-A- 5 602 666**

- **MACDONALD R I: "OPTOELECTRONIC EQUALISATION" IEEE PHOTONICS TECHNOLOGY LETTERS, Bd. 6, Nr. 4, 1.April 1994, Seiten 565-567, XP000446621**
- **GHOSH A ET AL: "DESIGN OF LEAST-MEAN-SQUARE BASED ADAPTIVE OPTICAL EQUALIZERS" OPTICS COMMUNICATIONS, Bd. 91, Nr. 3 / 04, 15.Juli 1992, Seiten 280-292, XP000278910**
- **PATENT ABSTRACTS OF JAPAN vol. 014, no. 414 (E-0975), 7.September 1990 & JP 02 159129 A (NIPPON TELEGR & TELEPH CORP), 19.Juni 1990,**
- **GOOKIN D M ET AL: "FINITE IMPULSE RESPONSE FILTER WITH LARGE DYNAMIC RANGE AND HIGH SAMPLING RATE" APPLIED OPTICS, Bd. 29, Nr. 8, 10.März 1990, Seite 1061/1062 XP000102390**
- **J CAPMANY ET. AL.: "Direct form I fiber-optic discrete-time signal processors using optical amplifiers and embedded Mach-Zehnder structures" IEEE PHOTONICS TECHNOLOGY LETTERS., Bd. 5, Nr. 7, Juli 1993, NEW YORK US, Seiten 842-844, XP000394497**
- **KOJI SASAYAMA ET AL: "COHERENT OPTICAL TRANSVERSAL FILTER USING SILICA-BASED WAVEGUIDES FOR HIGH-SPEED SIGNAL PROCESSING" JOURNAL OF LIGHTWAVE TECHNOLOGY, Bd. 9, Nr. 10, 1.Oktober 1991, Seiten 1225-1230, XP000241887**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Bei optischer Nachrichtenübertragung mit im Gbit/s-Bereich liegenden Datenraten über einen Lichtwellenleiter wird die Faserdispersion bestimmend für die überbrückbare Streckenlänge. Dies gilt insbesondere auch im Wellenlängenfenster um 1.55 $\mu$m, da hier die Dämpfung mittels optischer Verstärker eliminiert werden kann, während die Dispersion einer Standardfaser mit etwa 17 ps/nm/km recht große positive Werte aufweist. Es besteht daher ein Interesse an Komponenten, die eine negative Dispersion aufweisen und so zusammen mit der Standardfaser ein dispersionsfreies Übertragungsmedium bilden können. Für sehr breitbandige Anwendungen wie Wellenlängenmultiplex (WDM) wäre es darüber hinaus wünschenswert, auch die (bei 1,55 $\mu$m etwa 0,06 ps/nm$^2$/km betragende) Steigung der Dispersion der Standardfaser kompensieren zu können. Darüber hinaus können Komponenten von Interesse sein, die eine (auch im Vorzeichen) variable Dispersion besitzen, um z.B. die Restdispersion einer dispersionsverschobenen Faser bei der Senderwellenlänge kompensieren zu können.

Zur Dispersionskompensation ist die Nutzung passiver, linearer Prinzipien interessant, da sie, solange keine nichtlinearen Effekte in der Übertragung auftreten, den Einsatz von Kompensationskomponenten an jeder beliebigen Stelle der optischen Übertragungsstrecke erlauben. Außerdem besteht insbesondere bei den passiven Prinzipien die Aussicht auf preisgünstige und kompakte Komponenten.

Im Zusammenhang mit einer Dispersionskompensation sind neben (heute auch kommerziell erhältlichen) dispersionskompensierenden Fasern bereits verschiedene Komponenten vorgestellt worden: Fabry-Perot-Interferometer, Ringresonatoren, kaskadierte Mach-Zehnder-Interferometer, kaskadierte doppelbrechende Kristalle, Freistrahloptiken mit Gittern, Chirped Gratings.

Die Druckschrift D1 von A. Ghosh et al., "Design of leastmean-square based adaptive optical equalizers", Optics Communications, Bd. 91, Nr.3/4 15. Juli 1992, Seiten 280-292 betrifft unterschiedliche Möglichkeiten der Ausgestaltung effizienter optischer adaptiver Entzerrer für in Wellenleitern geführte optische Signale, deren Signalform durch Dispersion und andere zeitlich langsam variierende Abschwächungseffekte beeinträchtigt ist. Es wird die Wirkungsweise der auf dem LMS (Least-Mean-Squares)-Algorithmus basierenden optisch realisierten adaptiven Entzerrer analysiert. Die vorgestellten Entzerrer können auch zur Dispersionskompensation eingesetzt werden.

In der Druckschrift D2 von K. Sasayama et al., "Coherent optical transversal filter using silica-based waveguides for high-speed signal processing", Journal of Lightwave Technology, Bd. 9, Nr. 10, Oktober 1991, Seiten 1225-1230 wird ein kohärentes optisches Transversalfilter an deren Abgriffen Verzögerungselemente angebracht sind, genannt. Die Realisierung beliebiger Filtereigenschaften wird durch die Benutzung der Phaseninformation des optischen Signals erreicht. Die Phasenlage der unterschiedlich verzögerten Teilsignale wird durch Einbringen von Phasenschiebern in die Filterzweige beeinflusst. Dadurch können beliebige Frequenzcharakteristiken realisiert werden.

Aus der Druckschrift D3 von J. Capmany und J. Cascon, "Direct form I fiber-optic discrete-time signal processors using optical amplifiers and embedded Mach-Zehnder-structures", IEEE Photonics Technology Letters, Bd. 5, Nr. 7 Juli 1993 S. 842-844 sind faser-optische eingebettete Mach-Zehnder-Strukturen bekannt, die in Verbindung mit optischen Verstärkern zur Realisierung von rekonfigurierbaren Signalprozessoren verwendet werden. In Fig. 4a der Druckschrift D3 ist eine Anordnung offenbart, die aus einer Laufzeitkette mit N Laufzeitgliedern besteht, wobei die Laufzeiten durch den Abstand zwischen aufeinanderfolgenden, als Verzweiger bzw. Vereiniger betriebenen Richtkopplern hervorgerufen wird. Die Amplituden der einzelnen Filterkoeffizienten des derart realisierten Transversalfilters werden durch Einstellung der Verstärkungsfaktoren von Faserverstärkern verändert, welche in die Zweige zwischen Verzweiger und Vereiniger eingesetzt sind.

Die Erfindung zeigt demgegenüber einen anderen Weg zu einer Dispersionskompensation in optischen Übertragungssystemen.

Die Erfindung betrifft ein optisches Transversalfilter zur Dispersionskompensation in optischen Übertragungssystemen, das aus zwei Reihen von symmetrisch zueinander angeordneten Richtungskopplern aufgebaut ist. Eine erste Reihe weist jeweils in gleichen Laufzeit-Abständen aufeinanderfolgende, als Verzweiger betriebene Richtungskoppler mit einem Eingang und zwei Ausgängen auf, wobei der Eingang des ersten Verzweigers ein Filtereingang ist und jeweils ein erster Ausgang eines Verzweigers mit dem Eingang des nachfolgenden Verzweigers verbunden ist. Eine zweite Reihe weist ebenfalls jeweils in gleichen Laufzeit-Abständen aufeinanderfolgende, als Vereiniger betriebene Richtungskoppler mit zwei Eingängen und einem Ausgang auf, wobei jeweils der Ausgang eines Vereinigers mit einem ersten Eingang des nachfolgenden Vereinigers verbunden ist und der Ausgang des ersten Vereinigers ein Filterausgang ist. Der erste Ausgang des dem Filtereingang am fernsten liegenden letzten Verzweigers ist mit dem ersten Eingang eines dem Filterausgang am fernsten liegenden letzten Vereinigers verbunden und der zweite Ausgang des dem Filtereingang am nächsten liegenden ersten Verzweigers ist mit dem zweiten Eingang des dem Filterausgang am nächsten liegenden ersten Vereinigers verbunden. Ferner ist jeweils der zweite Ausgang des zweiten bis letzten Verzweigers mit dem zweiten Eingang des zweiten bis letzten Vereinigers verbunden. Das optische Transversalfilter ist dadurch gekennzeichnet, dass die Einstellung der Amplituden der Filterkoeffizienten durch Festlegung der Koppelfaktoren der Richtungskoppler erfolgt. Dadurch wird ein Filter mit negativer Wellenlängendispersion erzielt.

Die Erfindung bringt den Vorteil weitgehend frei wählbarer Verläufe von Dispersion und Transmission mit sich, wobei das mit dem Filter festgelegte Produkt aus der Dispersion und dem Quadrat der Bandbreite nahezu linear mit der Anzahl der Filterzweige erhöht werden kann.

Weitere Besonderheiten der Erfindung werden aus der nachfolgenden näheren Erläuterung der Erfindung anhand der Zeichnungen ersichtlich. Dabei zeigen

FIG 1    ein Prinzipschaltbild eines Transversalfilters,
FIG 2    ein Ausführungsbeispiel eines optischen Transversalfilters,
FIG 3    einen Verlauf der Übertragungsfunktion eines Filters zur Dispersionskompensation,
FIG 4    die Impulsantwort zu dieser Übertragungsfunktion,
FIG 5    Transmission und Dispersion eines Filters zur Dispersionskompensation,
FIG 6    Transmission und Dispersion eines optimierten Filters zur Dispersionskompensation.

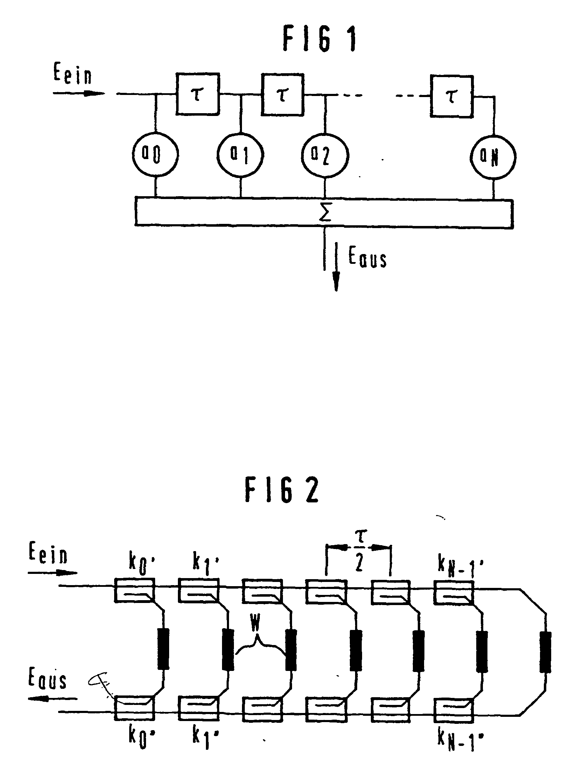

FIG 1 zeigt schematisch ein Transversalfilter mit einer Laufzeitkette aus N Laufzeitgliedern ($\tau$) der Laufzeit $\tau$ und N+1 mit auf einen jeweiligen Filterkoeffizienten (Abtastwert) einstellbaren Koeffizientengliedern $a_0$, ..., $a_N$ versehenen Abgriffszweigen, die zu einem Summator $\Sigma$ führen. Transversalfilter sind allgemein bekannt (s. z.B. Bocker: Datenübertragung, Berlin - Heidelberg - New York 1976, Band 1, Kap.5.3.2) und bedürfen hier keiner näheren Erläuterung; die Realisierung von optischen Transversalfiltern in planarer Form auf einem Silizium-Substrat ist an sich ebenfalls (aus J. Lightwave Technol., Vol.12(1994), pp 664 ... 669) bekannt, so daß es auch hier keiner näheren Erläuterung bedarf. Eine einfache Struktur eines optischen Transversalfilters zeigt FIG 2.

Gemäß FIG 2 weist das optische Transversalfilter eine Reihe von jeweils in einem Abstand $\tau/2$ aufeinanderfolgenden, als Verzweiger betriebenen Richtungskopplern $k_0'$, $k_1'$, ..., $k_{N-1}'$ und eine Reihe von ebenfalls jeweils im Abstand $\tau/2$ aufeinanderfolgenden, als Vereiniger betriebenen Richtungskopplern $k_0''$, $k_1''$, ..., $k_{N-1}''$ auf, wobei jeweils der zweite Ausgang jedes Richtungskopplers der als Verzweiger betriebenen Richtungskoppler $k_0'$, $k_1'$, ..., $k_{N-1}'$ zu dem zweiten Eingang des jeweils entsprechenden, als Vereiniger betriebenen Richtungskopplers $k_0''$, $k_1''$, ..., $k_{N-1}''$ führt. In den einzelnen Zweigen des optischen Transversalfilters können Heizelemente W angebracht sein, auf die weiter unten eingegangen wird.

Die Amplituden der einzelnen Filterkoeffizienten werden durch die Koppelfaktoren der einzelnen Verzweiger und Vereiniger realisiert, wobei bei der Dimensionierung auch die Wirkung der vor dem jeweiligen Verzweiger bzw. hinter dem jeweiligen Vereiniger liegenden Koppler zu berücksichtigen ist. Die Filterstruktur ist zweckmässigerweise symmetrisch, d.h. es werden gleiche Koppelfaktoren für Aus- und Einkopplung vorgesehen, so daß zusätzliche Verluste bei der Zusammenführung der Leistungsanteile vermieden werden.

Für ein Transversalfilter sehen die komplexe Übertragungsfunktion H(j$\omega$) für die elektrische Feldstärke und die Impulsantwort h(t) auf einen $\delta$-Impuls wie folgt aus:

$$H(j\omega) = \sum_{k=0}^{N} a_k \cdot e^{-jk\omega\tau} \qquad\qquad (1)$$

und

$$h(t) = \sum_{k=0}^{N} a_k \cdot \delta(t - k\tau), \qquad\qquad (2)$$

worin $\delta(t)$ die Deltafunktion ist.

Die Impulsantwort des Filters ergibt sich durch Fouriertransformation von H(j$\omega$) in den Zeitbereich. Wenn, wie dies gemäß G1.(2) bei einem Transversalfilter der Fall ist, die Impulsantwort zeitdiskret ist, ergibt sich ein periodischer Frequenzgang des Filters mit einer Periodizität (Free Spectral Range FSR) von FSR = 1/$\tau$.

Für die Transmission der optischen Leistung in Abhängigkeit von der Kreisfrequenz $\omega$ gilt dann:

$$\texttt{Transmission}(\omega) \;=\; |H(j\omega)|^2; \qquad\qquad (3)$$

der Verlauf der Phase $\varphi(\omega)$ über $\omega$ ist

$$\varphi(\omega) \; = \; arg\{H(j\omega)\}. \qquad\qquad (4)$$

Die Gruppenlaufzeit $T_g(\omega)$ ist

$$T_g(\omega) = -\frac{d\varphi}{d\omega} \qquad\qquad (5)$$

und die Dispersion $D(\omega)$

$$D(\omega) = \frac{dT_g}{d\lambda} \quad, \qquad\qquad (6)$$

woraus sich mit der Beziehung $c = \lambda f$

$$D(\omega) \; = \; \frac{d^2\varphi(\omega)}{d\omega^2} \frac{2\pi c}{\lambda^2} \qquad\qquad (7)$$

ergibt. Bei Betrachtung von Frequenzbereichen, die klein gegen die optische Frequenz sind, kann in Gl. (7) für $\lambda$ die mittlere Wellenlänge eingesetzt werden.

Wenn man die Übertragungsfunktion nach Betrag und Phase (bzw. Dispersion) vorgibt, so kann man daraus mittels Fouriertransformation die Impulsantwort bestimmen, und aus der Impulsantwort ergeben sich durch Abtastung mit der Abtastperiode $\tau = 1/FSR$ die Filterkoeffizienten $a_0 \ldots a_N$.

Es sei beispielsweise ein Filter mit einer Dispersion von -1000 ps/nm über eine Bandbreite von 10 GHz betrachtet. Aus Gl.(7) ist ersichtlich, daß für eine konstante Dispersion ein quadratischer Verlauf der Phase über $\omega$ notwendig ist:

$$\varphi(\omega) = \frac{\lambda_0^2}{4\pi c} D\omega^2 \,; \qquad\qquad (8)$$

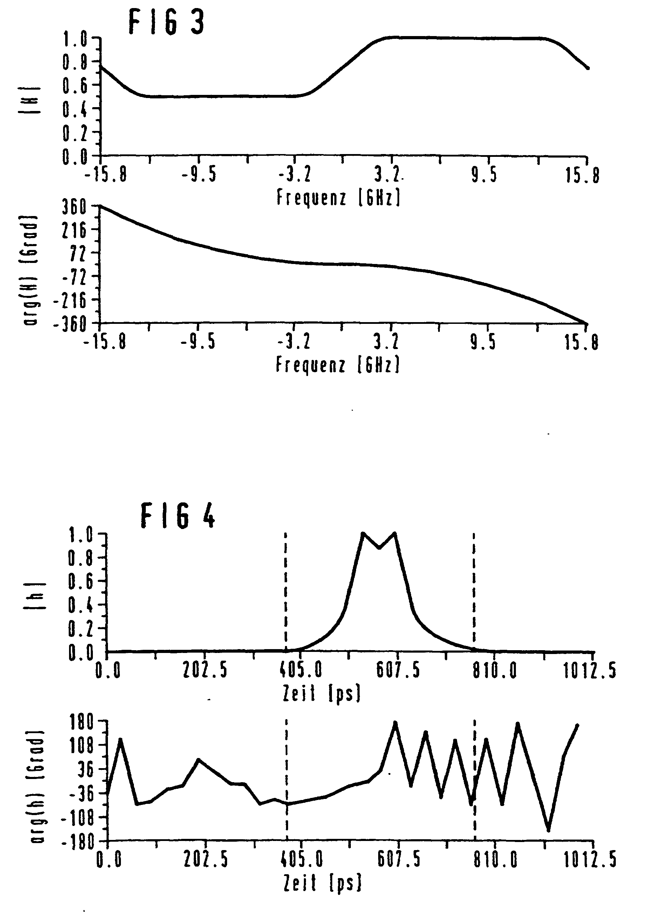

darin ist $\lambda_0$ die Wellenlänge (z.B. $\lambda_0 = 1.55\mu$m), bei der die gewünschte Dispersion $D$ exakt erreicht werden soll. In FIG 3 sind die in gewissen Grenzen frei gewählten Verläufe von Betrag und Phase der Übertragungsfunktion dargestellt. Bei der Phase wurde ausser auf den quadratischen Verlauf auch darauf geachtet, daß die Differenz der Phasen an den Bereichsgrenzen ein ganzzahliges Vielfaches von 360° ist, damit kontinuierliche Übergänge entstehen (der gezeigte Ausschnitt der Übertragungsfunktion wiederholt sich periodisch). Der Verlauf des Betrages wurde so gewählt, daß der Bereich negativer Dispersion im Bereich der höheren Transmission liegt. Auch hier muß auf möglichst kontinuierliche Übergänge geachtet werden, um die Länge der zugehörigen Impulsantwort möglichst gering zu halten.

Zu einem periodischen Filterverlauf sei bemerkt, daß er die gleichzeitige Dispersionskompensation bei mehreren Wellenlängen erlaubt. Die Dispersion der im Abstand FSR $=1/\tau$ aufeinanderfolgenden nutzbaren Filterbereiche ist jedoch von der Wellenlänge abhängig. Der Anteil $\dfrac{d^2\varphi(\omega)}{d\omega^2}$ in Gl. (7) weist in Abständen von FSR $=1/\tau$ immer die gleiche Größe auf, die mit K bezeichnet sei. Die Dispersion läßt sich damit wie folgt darstellen:

$$D_{periodisch} = K \frac{2\pi c}{\lambda^2} \qquad (12)$$

Die Ableitung nach $\lambda$ ergibt:

$$\frac{dD_{periodisch}}{d\lambda} = -K \frac{4\pi c}{\lambda^3} = \frac{-2}{\lambda} D_{periodisch} \qquad (13)$$

Zur Kompensation der Dispersion von 1 km Standardfaser bei einer Wellenlänge von 1,55 $\mu$m wird eine Dispersion von etwa -17 ps/nm benötigt. Aus G1.(13) ergibt sich dabei eine Steigung in der Dispersion der in Abständen von FSR = 1/$\tau$ aufeinanderfolgenden Filterbereiche von 0.02 ps/nm². Demgegenüber weist die Standardfaser pro Kilometer an Länge eine Steigung in der Dispersion von ca. 0.06 ps/nm² auf. Diese Steigung wird somit nicht kompensiert; es verbleibt vielmehr ein Wert von 0.08 ps/nm²km, so daß nur für eine Wellenlänge eine exakte Kompensation erreicht wird. Insbesondere bei nahe beieinander liegenden Wellenlängen sind indessen periodische Filterverläufe dennoch auch für Wellenlängenmultiplex (WDM) geeignet.

Die Anwendung der Fast Fourier Tansformation auf die in FIG 3 gezeigte Übertragungsfunktion ergibt die in FIG 4 dargestellte Impulsantwort. Die jeweils um $\tau$ = 1/FSR auseinanderliegenden Stützstellen (Abtastwerte) sind die gesuchten Filterkoeffizienten $a_k$ (in FIG 1). Da jedem Abtastwert ein Zweig im Transversalfilter (in FIG 1 und 2) entspricht, ist eine möglichst geringe Anzahl von Abtastwerten anzustreben. Dem hier betrachteten Ausführungsbeispiel liegen nur die 13 Abtastwerte zugrunde, die in dem in FIG 4 gestrichelt begrenzten Zeitbereich liegen.

Wie aus FIG 4 ersichtlich ist, sind die Phasen der Abtastwerte überwiegend ungleich 0° oder 180°, also komplex; es gilt also

$$a_k = |a_k| \cdot e^{j\varphi_k} \qquad (9)$$

Die Impulsantwort einer realisierbaren Übertragungsfunktion kann indessen nicht Abtastwerte mit beliebigen Phasen besitzen, sondern muß reell sein; wenn, wie hier, das gewünschte Übertragungsverhalten nur innerhalb einer Bandbreite benötigt wird, die klein im Vergleich zur absoluten (optischen) Frequenzlage ist, kann das Filter aber realisiert werden. Dabei werden die Phasen der Abtastwerte durch entsprechende Laufzeiten realisiert:

$$H(j\omega) = \sum_{k=0}^{N} |a_k| \cdot e^{j\varphi_k} \cdot e^{-jk\omega\tau} \qquad (10)$$

$$H(j\omega) = \sum_{k=0}^{N} |a_k| \cdot e^{-jk\omega(\tau-\tau_k)} \qquad (11)$$

mit

$$\tau_k = \frac{\varphi_k}{k\omega_0} \qquad \text{und} \qquad \omega \approx \omega_0.$$

Hierbei ist $\omega_0$ = 2$\pi$c/$\lambda_0$ die Kreisfrequenz, bei der die Phase exakt erreicht werden soll (z.B. bei $\lambda_0$ = 1.55$\mu$m).

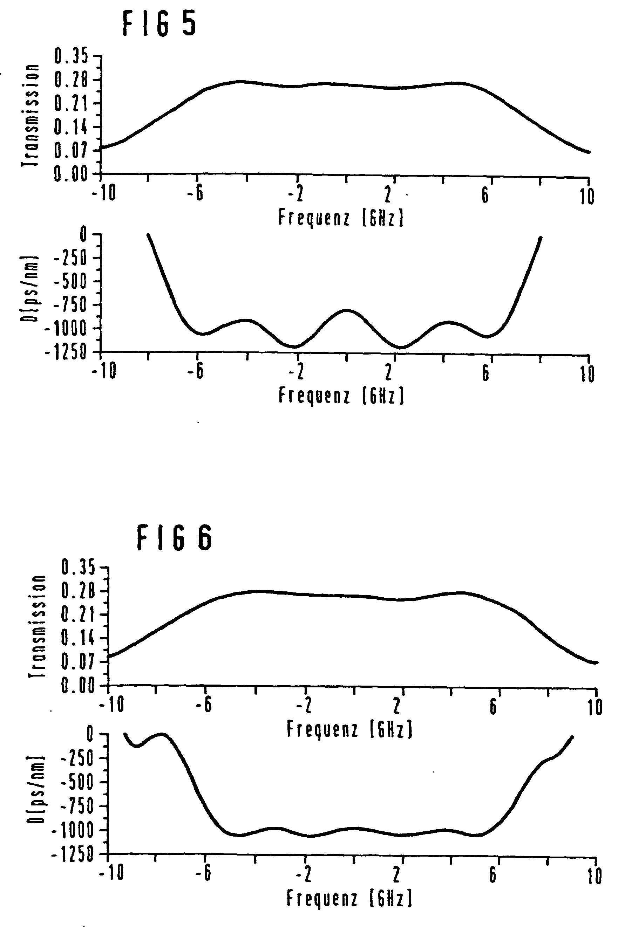

Unter Benutzung der in FIG 4 eingegrenzten 13 Abtastwerte ergeben sich für Transmission und Dispersion die in FIG 5 gezeigten Verläufe. Die Dispersion weist dabei eine relativ große Welligkeit auf, was darauf zurückzuführen ist, daß nicht die vollständige Impulsantwort betrachtet wurde, sondern nur 13 Abtastwerte darin.

Um auch mit einer solchen begrenzten Anzahl von Abtastwerten bessere Eigenschaften zu erreichen, kann eine Optimierung mit Rechnerhilfe durchgeführt werden, bei der die Amplituden (Beträge) und Phasen (Argumente) der Abtastwerte variiert werden. FIG 6 zeigt das Ergebnis einer solchen Optimierung, auf Grund derer das Filter eine relativ konstante Dispersion von -1000 ps/nm über eine Bandbreite von 10 GHz erhält, wobei in diesem Bereich die Transmission ein ebenso breites ausgeprägtes Maximum besitzt.

Dem hier betrachteten Beispiel liegt ein Free Spectral Range FSR = 31,6 GHz zugrunde.

Wie die Skalierung an der Transmissionskurve (in FIG 5 und 6) zeigt, weist das Filter eine Dämpfung von ca. 5.5 dB auf. Es ist auch möglich, bei gleicher Dispersion ein Filter mit frequenzunabhängiger Transmission zu entwerfen, wobei die Dämpfung ca. 7.5 dB betragen kann.

Zum Verständnis der bei Transversalfiltern prinzipiell vorhandenen Dämpfung sei hier folgendes bemerkt: Die Summe der Beträge aller Abtastwerte eines idealen verlustlosen Transversalfilters ist Eins. Die Transmission wird jedoch nur dann Eins sein, wenn bei der Zusammenfassung der einzelnen Leistungsanteile alle Wellen phasengleich addiert werden. Aufgrund der Laufzeitdifferenzen der einzelnen Anteile wird dies nur sehr schmalbandig möglich sein. Filter zur Dispersionskompensation sollten jedoch möglichst breitbandig sein, wobei dann über die gesamte Bandbreite hinweg bei keiner Frequenz alle Phasen der Leistungsanteile miteinander übereinstimmen werden.

Wie oben schon gesagt wurde, werden im Ausführungsbeispiel gemäß FIG 2 die Amplituden der einzelnen Filterkoeffizienten durch die Koppelfaktoren der einzelnen Verzweiger und Vereiniger realisiert, wobei bei der Dimensionierung auch die Wirkung der vor dem jeweiligen Verzweiger bzw. hinter dem jeweiligen Vereiniger liegenden Koppler zu berücksichtigen ist und wobei die Filterstruktur zweckmässigerweise symmetrisch ist, d.h. gleiche Koppelfaktoren für Aus- und Einkopplung vorgesehen werden, so daß zusätzliche Verluste bei der Zusammenführung der Leistungsanteile vermieden werden. Für das im vorstehenden umrissene optische Transversalfilter ergeben sich folgende Koppelfaktoren:

$$k_0 = -22{,}97\ \text{dB}, \quad k_1 = -20{,}28\ \text{dB}, \quad k_2 = -17{,}91\ \text{dB}, \quad k_3 = -13{,}45\ \text{dB},$$
$$k_4 = -9{,}77\ \text{dB}, \quad k_5 = -5{,}68\ \text{dB}, \quad k_6 = -4{,}63\ \text{dB}, \quad k_7 = -2{,}54\ \text{dB},$$
$$k_8 = -2{,}46\ \text{dB}, \quad k_9 = -2{,}57\ \text{dB}, \quad k_{10} = -2{,}85\ \text{dB}, \quad k_{11} = -1{,}99\ \text{dB}.$$

Die der bei FSR = 31,6 GHz benötigten Laufzeitdifferenz $\tau$ = 31,64 ps entsprechende Weglänge beträgt (bei einer Brechzahl von n = 1,5) 6,3 mm.

Durch Verändern der Laufzeit $\tau$ lässt sich insofern ein Austausch zwischen Bandbreite B und Dispersion D erreichen, als das Produkt $B^2D$ für das betreffende Filter konstant bleibt. Mit einer Variation der Laufzeit $\tau$ wird gewissermaßen eine Dehnung bzw. Stauchung des Frequenzmaßstabes der sonst unveränderten Filtercharakteristik erreicht; ein Verdoppeln der Bandbreite B äussert sich in einer Verringerung der Dispersion D um den Faktor 4. Grundsätzlich können beliebige Werte für B und D vorgesehen werden. Bei größeren werten von $B^2D$ wird jedoch eine größere Anzahl von Abtastwerten benötigt, was der Realisierung entsprechende Grenzen setzt. In der Praxis zeigt sich, daß Abtastwerte, die kleiner als 2,5% des maximalen Abtastwertes sind, nicht realisiert werden müssen. Diese Randbedingung ist auch bei dem hier erläuterten Ausführungsbeispiel gegeben.

Während bei konstanter Bandbreite die Dispersion etwa linear mit der Anzahl der Abtastwerte ansteigt, nimmt der Anstieg in der durch das Filterprinzip bedingten Dämpfung mit zunehmender Anzahl von Abtastwerten ab, so daß sich das Verhältnis von Dispersion zu Dämpfung verbessert. So beträgt dieses Verhältnis beispielsweise 709 ps/nm/dB bei einer Bandbreite von 10 GHz und 57 Abtastwerten; bei 250 ps/nm/dB, wie dies derzeit bei dispersionskompensierenden Fasern erreicht wird, dürfte dieses Transversalfilter noch etwa 26 dB zusätzlicher Dämpfung mit sich bringen, um dennoch insgesamt bessere Ergebnisse als bei dispersionskompensierenden Fasern zu erreichen. Es sei daran erinnert, daß diese Eigenschaften des Transversalfilters im Vergleich zur Faser an eine nicht zu grosse Bandbreite gebunden sind; bei einer Bandbreite von 20 GHz hätte die auf die prinzipielle Dämpfung bezogene Dispersion einen Wert von im Beispiel 177 ps/nm/dB.

Zur Feinabstimmung der Phasen (Argumente) der einzelnen (komplexen) Abtastwerte können in den Zweigen des optischen Transversalfilters Heizelemente W angebracht werden, wie dies auch in FIG 2 angedeutet ist. Es können auch abstimmbare Richtungskoppler vorgesehen sein, die auch die Einstellung der Beträge der Abtastwerte erlauben. Heizelemente oder auch abstimmbare Koppler vorzusehen ist bei optischen Transversalfiltern an sich ebenfalls (aus J. Lightwave Technol., Vol.12(1994), pp 664 ... 669) bekannt, so daß es hier keiner näheren Erläuterungen bedarf.

Zur Stabilisierung des Filters auf die Wellenlänge des Sendelasers kann bei entsprechender Dimensionierung des Filters die Transmission (s. FIG 6) dienen. Eine Verschiebung der Filterkurve ist durch gleichmäßiges Verändern der Laufzeiten aller Zweige mit Hilfe der Heizelemente möglich. Umgekehrt ist aber auch eine Stabilisierung der Senderwellenlänge auf die Filterkurve möglich, was insbesondere bei großen Filtern in Betracht kommen wird. In diesem Fall würde, falls erforderlich, ein einmaliger Abgleich des Filters ausreichen, und es müßte im Betrieb lediglich die Temperatur des Filters konstant gehalten werden.

**Patentansprüche**

1. Optisches Transversalfilter zur Dispersionskompensation in optischen Übertragungssystemen, welches über einen Filtereingang und einen Filterausgang verfügt, und

   das aus zwei Reihen von symmetrisch zueinander angeordneten Richtungskopplern ($k_0$', $k_1$', ..., $k_{N-1}$' ; $k_0$", $k_1$", ..., $k_{N-1}$") aufgebaut ist, und

   bei dem eine erste Reihe jeweils in gleichen Laufzeit-Abständen aufeinanderfolgende, als Verzweiger betriebene Richtungskoppler ($k_0$', $k_1$', ..., $k_{N-1}$') mit einem Eingang und zwei Ausgängen aufweist,

   dass der Eingang des ersten Verzweigers ($k_0$') der Filtereingang ist,

   und dass jeweils ein erster Ausgang eines Verzweigers mit dem Eingang des nachfolgenden Verzweigers verbunden ist,

   dass eine zweite Reihe ebenfalls jeweils in gleichen Laufzeit-Abständen aufeinanderfolgende, als Vereiniger betriebene Richtungskoppler ($k_0$", $k_1$", ... , $k_{N-1}$") mit zwei Eingängen und einem Ausgang aufweist,

   dass jeweils der Ausgang eines Vereinigers mit einem ersten Eingang des nachfolgenden Vereinigers verbunden ist,

   dass der Ausgang des ersten Vereinigers ($k_0$") der Filterausgang ist,

   dass der erste Ausgang des dem Filtereingang am fernsten liegenden letzten Verzweigers ($k_{N-1}$') mit dem ersten Eingang eines dem Filterausgang am fernsten liegenden letzten Vereinigers ($k_{N-1}$") verbunden ist,

   dass der zweite Ausgang des dem Filtereingang am nächsten liegenden ersten Verzweigers ($k_0$') mit dem zweiten Eingang des dem Filterausgang am nächsten liegenden ersten Vereinigers ($k_0$") verbunden ist, und

   dass jeweils der zweite Ausgang des zweiten bis letzten Verzweigers ($k_1$',..., $k_{N-1}$') mit dem zweiten Eingang des zweiten bis letzten Vereinigers ($k_1$",..., $k_{N-1}$") verbunden ist,

   **dadurch gekennzeichnet,**

   **dass** das optische Transversalfilter durch Einstellung der Amplituden der Filterkoeffizienten durch Festlegung der Koppelfaktoren der Richtungskoppler ($k_0$', $k_1$', ..., $k_{N-1}$' ; $k_0$" , $k_1$", ..., $k_{N-1}$") als Filter mit negativer Wellenlängendispersion ausgebildet ist.

**Claims**

1. Optical transversal filter for dispersion compensation in optical transmission systems which has a filter input and a filter output, and

   which is constructed of two series of directional couplers ($k_0$', $k_1$', ..., $k_{N-1}$' ; $k_0$", $k_1$", ..., $k_{N-1}$") arranged symmetrically with respect to each other, and

   wherein a first series has directional couplers ($k_0$', $k_1$', ..., $k_{N-1}$') which succeed one another in each case at equal delay spacings and which are operated as splitters, which directional couplers have one input and two outputs,

   the input of the first splitter ($k_0$') being the filter input and in each case a first output of one splitter being connected to the input of the succeeding splitter,

   wherein a second series also has directional couplers ($k_0$", $k_1$", ..., $k_{N-1}$") which succeed one another in each case at equal delay spacings and which are operated as combiners, which directional couplers have two inputs and one output,

   the output of a combiner being connected in each case to a first input of the succeeding combiner,

   the output of the first combiner ($k_0$") being the filter output, the first output of the last splitter $k_{N-1}$') located furthest away from the filter input being connected to the first input of a last combiner ($k_{N-1}$") located furthest away from the filter output,

   the second output of the first splitter ($k_0$') located closest to the filter input being connected to the second input of the first combiner ($k_0$") located closest to the filter output, and

   wherein the second output of the second to last splitter ($k_1$',..., $k_{N-1}$') is connected in each case to the second input of the second to last combiner ($k_1$",..., $k_{N-1}$"),

   **characterised in that**

   the optical transversal filter is embodied as a filter having negative wavelength dispersion by setting of the amplitudes of the filter coefficients by specification of the coupling factors of the directional couplers ($k_0$', $k_1$', ..., $k_{N-1}$' ; $k_0$", $k_1$", ..., $k_{N-1}$").

**Revendications**

1.  Filtre transversal optique pour compenser la dispersion dans des systèmes de transmission optique, lequel dispose d'une entrée de filtre et d'une sortie de filtre et

lequel est constitué par deux séries de coupleurs directionnels ($k_0'$, $k_1'$, ..., $k_{N-1}'$ ; $k_0''$, $k_1''$, ..., $k_{N-1}''$), disposés symétriquement les uns aux autres, et

dans lequel une première série comporte des coupleurs directionnels ($k_0'$, $k_1'$, ..., $k_{N-1}'$) utilisés comme répartiteurs, se succédant les uns aux autres respectivement à des intervalles de temps de parcours identiques et présentant une entrée et deux sorties,

l'entrée du premier répartiteur ($k_0'$) étant l'entrée du filtre et

une première sortie d'un répartiteur étant respectivement reliée à l'entrée du répartiteur suivant,

dans lequel une seconde série comporte des coupleurs directionnels ($k_0''$, $k_1''$, ..., $k_{N-1}''$) utilisés comme unificateurs, se succédant également les uns aux autres respectivement à des intervalles de temps de parcours identiques et présentant deux entrées et une sortie,

la sortie d'un unificateur étant respectivement reliée à une première entrée du unificateur suivant,

la sortie du premier unificateur ($k_0''$) étant la sortie du filtre,

dans lequel la première sortie du dernier répartiteur ($k_{N-1}'$) le plus éloigné de l'entrée du filtre est reliée à la première entrée d'un dernier unificateur ($k_{N-1}''$) le plus éloigné de la sortie du filtre,

dans lequel la deuxième sortie du premier répartiteur ($k_0'$) le plus proche de l'entrée du filtre est reliée à la deuxième entrée du premier unificateur ($k_0''$) le plus proche de la sortie du filtre, et

dans lequel la deuxième sortie du deuxième au dernier répartiteur ($k_1'$, ... $k_{N-1}'$) est reliée respectivement à la deuxième entrée du deuxième au dernier unificateur ($k_1''$, ... $k_{N-1}''$),

**caractérisé en ce que**

le filtre transversal optique, en réglant les amplitudes des coefficients du filtre par détermination des facteurs de couplage des coupleurs directionnels ($k_0'$, $k_1'$, ..., $k_{N-1}'$ ; $k_0''$, $k_1''$, ..., $k_{N-1}''$), est exécuté comme filtre à dispersion négative de longueur d'onde.

# FIG 1

# FIG 2

## F I G 3

## F I G 4

## FIG 5

## FIG 6